# EUROPEAN PATENT APPLICATION

(11) **EP 2 573 049 A1**
(43) Date of publication of application: **27.03.2013**
(21) Application number: 11783580.1
(22) Date of filing: 18.05.2011
(51) Int. Cl.: C02F 1/28, B01D 69/08, C02F 1/42, C02F 1/44, B01D 24/02, B01D 36/00

(54) **GRAVITY-FILTRATION WATER PURIFIER**

(30) Priority: 18.05.2010 JP 2010114336
(71) Applicant: Mitsubishi Rayon Cleansui Company, Limited, Tokyo 103-0016 (JP)
(72) Inventor: TAKEDA Hatsumi, Toyohashi-shi Aichi 440-8601 (JP); HATAKEYAMA Atsushi, Tokyo 103-0016 (JP)
(74) Representative: HOFFMANN EITLE
(86) International application number: PCT/JP2011/061406
(87) International publication number: WO 2011/145646

(57) **Abstract**

A gravity-filtration water purifier includes a vessel body, a plurality of partition units that are detachably attached to the vessel body and that vertically partition at least a part in the vessel body into a plurality of stages, and a water filter cartridge that is mounted on each of the plurality of partition units and that purifies water on the partition unit and supplies the purified water to below the partition unit. Here, the gravity-filtration water purifier purifies raw water supplied to the uppermost stage using its own weight.

## Description

### Technical Field

The present invention relates to a gravity-filtration water purifier.
Priority is claimed on Japanese Patent Application No. 2010-114336, filed May 18, 2010, the content of which is incorporated herein by reference.

### Background Art

As a gravity-filtration water purifier that filters and purifies raw water using its own weight, for example, a pitcher-type water purifier that has both a water purifying function and a pitcher function and that can be received in a domestic refrigerator or a stationary water purifier that has a water server (water dispenser) function using a bottle of about 5 gallons is known.

A specific example of such a water purifier is a pitcher-type water purifier which includes a vessel body and an inner vessel detachably attached to the top of the vessel body and having a water filter cartridge and in which the vessel body is partitioned into an upper section and a lower section in the inner vessel (for example, see PTL 1 and PTL 2). Ion exchangers, activated charcoal, and the like are used as the filter material of the water filter cartridge of the water purifier.

### Citation List

### Patent Literature

[PTL 1] Published Japanese Translation No. 2001-502596 of the PCT International Publication
[PTL 2] Published Japanese Translation No. 2003-514647 of the PCT International Publication

### Summary of Invention

### Technical Problem

The water purifiers described in PTL 1 and PTL 2 employ a water filter cartridge including plural filter materials such as ion exchangers and activated charcoal so as to highly purify raw water. When the purification performance of the used ion exchangers and activated charcoal is lowered, the water filter cartridge is detached and a predetermined regeneration process is performed thereon to regenerate the filter materials. However, in such water purifiers, plural filter materials such as ion exchangers and activated charcoal are housed in the same water filter cartridge. Accordingly, for example, even when the purification performance of the ion exchangers is lowered and regeneration is intended, it is not possible to detach only the ion exchangers and to perform the regeneration process. When the purification performance of plural filter materials is lowered, the regeneration process on each filter material has to be sequentially performed. Accordingly, the filter material regenerating process is complicated and the efficiency thereof is poor.

An object of the invention is to provide a gravity-filtration water purifier that filters and purifies raw water using its own weight, that can highly purify raw water using plural filter materials, and that can efficiently regenerate the filter materials.

### Solution to Problem

The invention employs the following configurations to achieve the above-mentioned object.
(1) A gravity-filtration water purifier including: a vessel body; a plurality of partition units that are detachably attached to the vessel body and that vertically partition at least a part in the vessel body into a plurality of stages; and a water filter cartridge that is mounted on each of the plurality of partition units and that purifies water on the partition unit and supplies the purified water to below the partition unit, wherein raw water supplied to the uppermost stage is purified using its own weight.
(2) The gravity-filtration water purifier according to (1), wherein each partition unit includes an air-discharge groove.
(3) The gravity-filtration water purifier according to (1) or (2), wherein an opening is formed in each partition unit and the water filter cartridge is detachably attached to the opening.
(4) The gravity-filtration water purifier according to any one of (1) to (3), wherein each partition unit is an inner vessel.
(5) The gravity-filtration water purifier according to any one of (1) to (4), wherein at least one of the water filter cartridges includes an ion exchanger as a filter material.
(6) The gravity-filtration water purifier according to any one of (1) to (5), wherein at least one of the water filter cartridges includes a hollow fiber membrane module as a filter material.
(7) The gravity-filtration water purifier according to any one of (1) to (6), wherein at least one of the water filter cartridges includes activated charcoal as a filter material.
(8) The gravity-filtration water purifier according to any one of (1) to (7), wherein shapes of fitting portions of the water filter cartridges to all the partition units are compatible with each other.
(9) The gravity-filtration water purifier according to any one of (1) to (7), wherein a shape of a fitting portion of the water filter cartridge to at least one of the partition units is incompatible with the other shapes.
(10) The gravity-filtration water purifier according to any one of (5) to (9), wherein the ion exchanger is an Na-type ion exchanger or a K-type ion exchanger.

### Advantageous Effects of Invention

The gravity-filtration water purifier according to the invention is a water purifier that filters and purifies raw water using its own weight, and can highly purify raw water using plural filter materials, and that can efficiently regenerate the filter materials.

### Brief Description of Drawings

FIG. 1 is a perspective view illustrating a water purifier according to an embodiment of the invention.
FIG. 2 is a longitudinal cross-sectional view of the water purifier shown in FIG. 1.
FIG. 3 is a cross-sectional view illustrating a water purifier according to another example of the invention.
FIG. 4 is a cross-sectional view illustrating a water purifier according to another example of the invention.

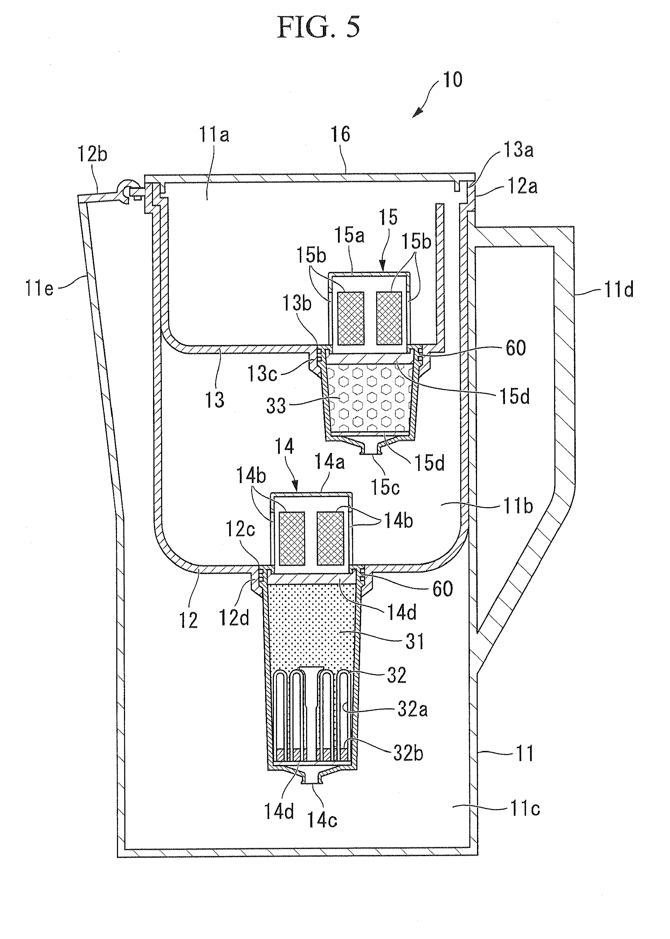

FIG. 5 is a cross-sectional view illustrating a water purifier according to another example of the invention.

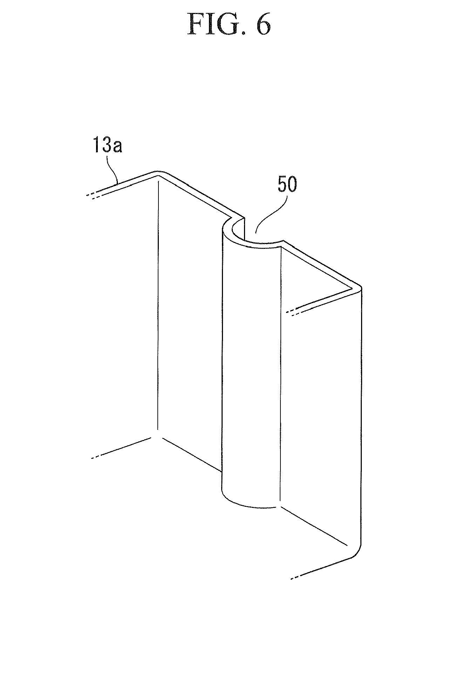

FIG. 6 is a perspective view illustrating a partition unit including an air-discharge groove.

### Description of Embodiments

A gravity-filtration water purifier according to the invention is a water purifier that sequentially filters and purifies raw water through plural water filter cartridges under its own weight.
Hereinafter, a gravity-filtration water purifier according to an embodiment of the invention will be described in detail with reference to the accompanying drawings.

### First Embodiment

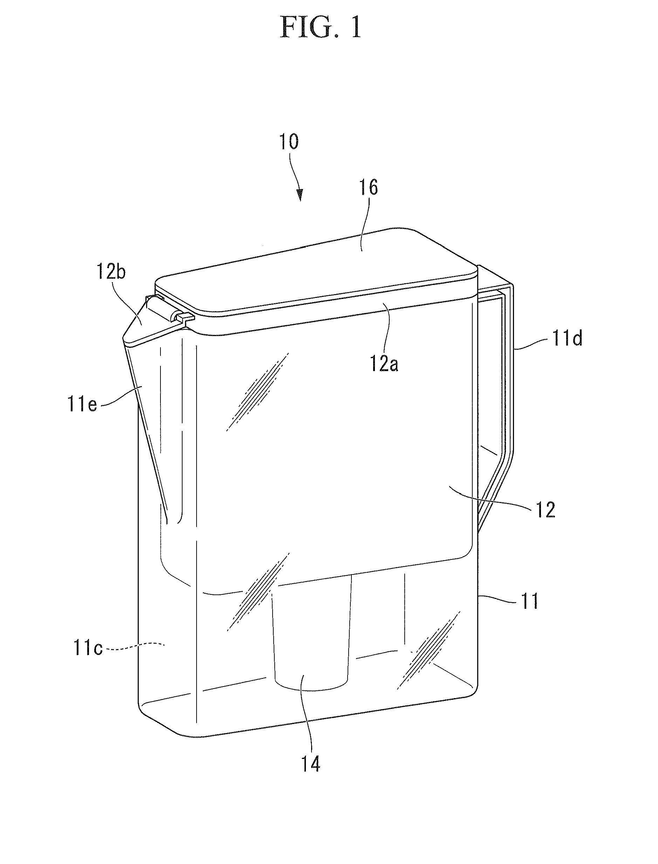

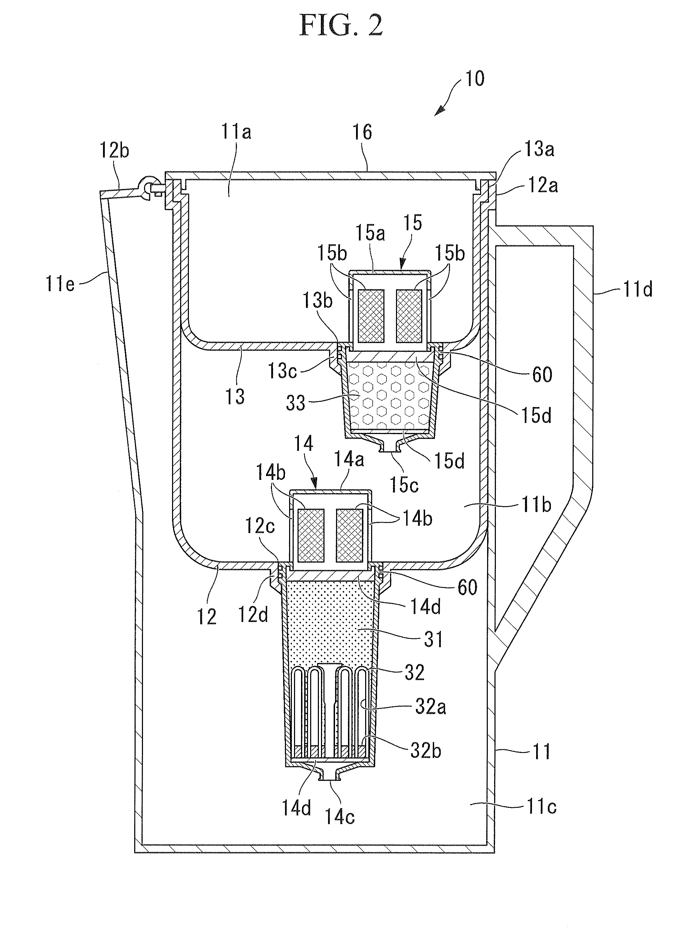

FIG. 1 is a perspective view illustrating a pitcher-type gravity-filtration water purifier 10 (hereinafter, referred to as "water purifier 10") which is an example of a gravity-filtration water purifier according to an embodiment of the invention. FIG 2 is a longitudinal cross-sectional view of the water purifier 10.
As shown in FIGS. 1 and 2, the water purifier 10 includes a vessel body 11, two partition units 12 and 13 that are detachably attached to the vessel body 11 and that vertically partition the inside of the vessel body 11 into three stages, two water filter cartridges 14 and 15 that are attached to the partition units 12 and 13, respectively, and a cover member 16 that seals the top of the vessel. The partition unit 12 is detachably attached to vertically partition a part in the vessel body 11. The partition unit 13 is detachably attached to the partition unit 12 so as to vertically further partition the part on the partition unit 12 in the vessel body 11. Accordingly, the inside of the vessel body 11 is partitioned into three stages of a raw water reservoir 11a, a first purified water reservoir 11b, and a second purified water reservoir 11c by the partition units 12 and 13.

The shape of the vessel body 11 is not particularly limited, and the cross-section thereof has a rectangular shape in this example.
A handle 11d is formed on the outer surface of one side wall of the vessel body 11. A spout 11e communicating with the second purified water reservoir 11c is formed on the side of the vessel body 11 opposite to the handle 11d so as to pour purified water stored in the second purified water reservoir 11c from the spout 11e to a cup or the like.

The partition unit 12 is formed of a cup-like vessel fitted to the top of the vessel body 11, that is, an inner vessel, and a stepped portion 12a in which the vessel protrudes outward is formed on the top thereof. The partition unit 12 is detachably attached to the vessel body 11 by placing the stepped portion 12a at the upper edge of the opening of the vessel body 11. By mounting the partition unit 12 on the vessel body 11, the inside of the vessel body 11 is vertically partitioned to form a second purified water reservoir 11c interposed between the vessel body 11 and the partition unit 12.
A cover piece 12b closing the spout 11e is hinge-coupled to the partition unit 12 at the position corresponding to the spout 11e of the vessel body 11.

An opening 12c is formed in the bottom of the partition unit 12 and a water filter cartridge 14 is detachably attached thereto.
The configuration in which the water filter cartridge 14 is detachably attached to the opening 12c of the partition unit 12 is not particularly limited. In this example, a cylindrical opening stepped portion 12d extending downward from the lower edge of the opening 12c is formed in the partition unit 12 and a spiral screwed portion is formed on the inner surface of the opening stepped portion 12d so as to be screwed to the water filter cartridge 14. In another configuration, for example, a flange portion protruding outward may be formed in the body of the water filter cartridge 14 and the water filter cartridge 14 is attached by locking the flange portion to the upper edge of the opening 12c. A sealing structure in which a groove to which an O-ring or a gasket is fitted is formed in any one of the water filter cartridge 14 and the opening stepped portion 12d and the water filter cartridge 14 is tightly sealed with the O-ring, the gasket, or the like may be employed to attach the water filter cartridge 14.

The water filter cartridge 14 serves to further purify purified water (purified water having been purified through one stage of the water filter cartridge 15, which is referred to as "first purified water") stored in the first purified water reservoir 11b on the partition unit 12.
The configuration of the water filter cartridge 14 is not particularly limited, as long as it is a configuration in which it is attached to the partition unit 12 to purify the first purified water of the first purified water reservoir 11b on the partition unit 12 and it can cause the purified water (hereinafter, referred to as "second purified water") to flow out to the second purified water reservoir 11c under the partition unit 12. The water filter cartridge 14 in this example includes a case member 14a having a substantially cylindrical shape and having filter materials built therein. An inlet 14b into which the first purified water flows is formed in the top of the case member 14a and an outlet 14c from which the second purified water flows out is formed in the bottom thereof. A mesh for removing impurities in water or the like is attached to the inlet 14b of the water filter cartridge 14.
The water filter cartridge 14 is attached to the partition unit 12 so that the inlet 14b into which the first purified water flows is located on the upper side of the partition unit 12, that is, in the first purified water reservoir 11b and the outlet 14c from which the second purified water flows out is located on the lower side of the partition unit 12, that is, in the second purified water reservoir 11c.

The water filter cartridge 14 includes an activated charcoal 31 and a hollow fiber membrane module 32 as filter materials. Two filters 14d formed of non-woven fabric are disposed in the water filter cartridge 14, the hollow fiber membrane module 32 is disposed by fixing the hollow fiber membrane module 32a to the lower filter 14d with a potting material 32b, and the activated charcoal 31 is filled in the upper side thereon.
Residual chlorine in water, mold scent, and organic compounds such as trihalomethane are adsorbed and removed by the activated charcoal 31. Granular materials with a diameter of 0.1 µm or more including microorganisms and bacteria are removed through filtering by the hollow fiber membrane module 32.

Activated charcoals normally used as the filter material of a water filter cartridge can be used as the activated charcoal 31. Examples thereof include powdered activated charcoal, granular activated charcoal into which the powdered activated charcoal is granulated, fibrous activated charcoal, and shaped activated charcoal obtained by solidifying the powered and/or granular activated charcoal with a binder. Among these, the granular activated charcoal can be preferably used in view of handling characteristics and cost.
Specific examples thereof include vegetable materials (such as wood, cellulose, sawdust, charcoal, coconut shell charcoal, and sawdust charcoal), coal materials (such as peat, lignite, brown coal, bituminous coal, anthracite, and tar), petroleum materials (such as petroleum residue, acid sludge, and oil carbon), and materials obtained by gas-activating (such as water vapor, carbon dioxide, and air) or chemical-activating (such as calcium chloride, magnesium chloride, zinc chloride, phosphoric acid, sulfuric acid, sodium hydroxide, and potassium hydroxide) pulping waste liquor, synthetic resins, or the like.
Examples of the fibrous activated charcoal include materials obtained by carbonizing and activating precursors having polycarylonitrile (PAN), cellulose, phenol, petroleum pitch as a raw material.
It is preferable that silver be attached to and/or mixed into the activated charcoal. Accordingly, it is easy to suppress the propagation of bacteria or microorganisms in the activated charcoal.

Various porous and tubular hollow fiber membranes normally used as a filter material of a water filter cartridge can be used as the hollow fiber membrane 32a. Hollow fiber membranes formed of various materials such as celluloses, polyolefins (such as polyethylenes and polypropylenes), polyvinyl alcohols, ethylene-vinyl alcohol copolymers, polyethers, polymethyl methacrylates (PMMA), polysulfones, polyacrylonitriles, polytetrafluoroethylenes (Teflon (registered trademark)), polycarbonates, polyesters, polyamides, and aromatic polyamides. Among these, the hollow fiber membranes formed of polyolefins such as polyethylenes or polypropylenes can be preferably used in view of handling characteristics, processing characteristics, and incineration characteristics at the time of wasting.

The hollow fiber membrane 32a is preferably a so-called permanent hydrophilic hollow fiber membrane having a hydrophilic group on the surface thereof. As the surface of the hollow fiber membrane becomes closer to a hydrophilic property, the filtration can be more easily performed with its own water pressure of supplied water.
Since the water-passing speed of the water filter cartridges 14 and 15 in the water purifier 10 depends on the water-passing speed of the hollow fiber membrane 32a, the configuration of the hollow fiber membrane 32a can be appropriately selected so as to achieve a sufficient water-passing speed with the weight of water in consideration thereof.
The outer diameter of the hollow fiber membrane 32a is preferably in a range of 20 µm to 2000 µm, the pore diameter thereof is preferably in a range of 0.01 µm to 1 µm, the porosity thereof is preferably in a range of 20% to 90%, and the thickness thereof is preferably in a range of 5 µm to 300 µm.

Resins normally used to fix the hollow fiber membrane can be used as the potting material 32b and examples thereof include fixing resins such as an urethane resin, an epoxy resin, and a polyolefin resin.

The partition unit 13 is formed of a cup-like vessel, that is, an inner vessel, which is fitted to the top of the partition unit 12 and a stepped portion 13a in which the vessel protrudes outward is formed in the top thereof. The partition unit 13 is detachably attached to the vessel body 11 along with the partition unit 12 by placing the stepped portion 13a on the upper edge of the opening of the partition unit 12. By further attaching the partition unit 13 to the partition unit 12 attached to the vessel body 11, the upper side in the vessel body 11 from the partition unit 12 is further partitioned to form a first purified reservoir 11b interposed between the partition unit 12 and the partition unit 13 and a raw water reservoir 11a on the partition unit 13.

Similarly to the partition unit 12, an opening 13b is formed in the bottom of the partition unit 13 and a water filter cartridge 15 is detachably attached thereto.
The configuration in which the water filter cartridge 15 is detachably attached to the partition unit 13 is not particularly limited. In this example, similarly to the configuration in which the water filter cartridge 14 is attached to the partition unit 12, a cylindrical opening stepped portion 13c extending downward from the lower edge of the opening 13b is formed in the partition unit 13, a spiral screwed portion is formed on the inner surface of the opening stepped portion 13c, and the water filter cartridge 15 can be screwed thereto. A flange portion protruding outward may be formed in the body of the water filter cartridge 15 and the water filter cartridge 15 may be attached by locking the flange portion to the upper edge of the opening 13b. A sealing structure in which a groove to which an O-ring or a gasket is fitted is formed in any one of the water filter cartridge 15 and the opening stepped portion 13c and the water filter cartridge 15 is tightly sealed with the O-ring, the gasket, or the like may be employed to attach the water filter cartridge 15.

The water filter cartridge 15 serves to purify purified water stored in the raw water reservoir 11a on the partition unit 13.
The configuration of the water filter cartridge 15 is not particularly limited, as long as it is a configuration in which it is attached to the partition unit 13 to purify the raw water of the raw water reservoir 11a on the partition unit 13 and it can cause the first purified water to flow out to the first purified water reservoir 11b under the partition unit 13. The water filter cartridge 15 in this example includes a case member 15a having a substantially cylindrical shape and having filter materials built therein. An inlet 15b into which the raw water flows is formed in the top of the case member 15a and an outlet 15c from which the first purified water to flow out is formed in the bottom thereof. A mesh for removing impurities in water or the like is attached to the inlet 15b of the water filter cartridge 15.
The water filter cartridge 15 is attached to the partition unit 13 so that the inlet 15b into which the raw water flows is located on the upper side of the partition unit 13, that is, in the raw water reservoir 11a and the outlet 15c from which the first purified water flows out is located on the lower side of the partition unit 13, that is, in the first purified water reservoir 11b.

The water filter cartridge 15 includes an ion exchanger 33 as a filter material.
Ion exchangers normally used as the filter material of the water filter cartridge can be used as the ion exchanger 33. Examples thereof include aluminosilicate-based inorganic ion exchangers, cation exchangers, and anion exchangers.
Examples of the aluminosilicate-based inorganic ion exchangers include Molecular Sieve 3A, Molecular Sieve 4A, Molecular Sieve 5A, Molecular Sieve 13X, faujasite type zeolites, and mordenite type zeolites, which are synthetic zeolites. These synthetic zeolites have high adsorption capacity of heavy metal ions and particularly, Molecular Sieve 5A has adsorption capability of soluble lead ions.
A Na ion exchanger or a K ion exchanger can be preferably used as the ion exchanger. These ion exchangers can be easily regenerated at a low cost using food additives such as common salts or health foods at home.
The ion exchanger 33 can be received in the water filter cartridge 15, for example, by interposing the ion exchanger between two filters 15d formed of non-woven fabric and disposed in the water filter cartridge.

The water filter cartridge 14 and the water filter cartridge 15 are preferably misaligned with each other in the horizontal position. In this way, by arranging the water filter cartridge 14 and the water filter cartridge 15 to be misaligned with each other in the horizontal position, the distance between the partition unit 12 and the partition unit 13 can be reduced, that is, the first purified water reservoir 11b can be narrowed, and thus the height of the water purifier 10 does not excessively increase, even when the height of the water filter cartridge is large.

The cover member 16 is not particularly limited, as long as it can close the opening of the partition unit 12. It is preferable that the raw water reservoir 11a of the water purifier 10 can be sealed by disposing a packing at the edge thereof or the like. Accordingly, it is possible to easily suppress the leakage of raw water from the raw water reservoir 11a of the water purifier 10 when pouring the purified water (the second purified water) from the spout 11e of the water purifier 10.

The operation of the water purifier 10 will be described below.
The cover member 16 of the water purifier 10 is opened and raw water is supplied to the partition unit 13 which is the uppermost stage of the water purifier 10, that is, the raw water reservoir 11a in the vessel body 11. The raw water supplied to the raw water reservoir 11a flows into the water filter cartridge 15 from the inlet 15b by its own weight and is purified by removing ions such as heavy metal ions in water through the use of the ion exchanger 33. The first purified water flows out from the outlet 15c and is stored in the first purified water reservoir 11b. The first purified water stored in the first purified water reservoir 11b flows into the water filter cartridge 14 from the inlet 14b by its own weight and is purified by removing residual chlorine in water, mold scent, and organic compounds such as trihalomethane through adsorption in the activated charcoal 31 and filtering and removing granular materials with a diameter of 0.1 µm or more including microorganisms and bacteria through the use of the hollow fiber membrane module 32. The second purified water flows out from the outlet 14c and is stored in the second purified water reservoir 11c.
The purified water (the second purified waster) stored in the second purified water reservoir 11c can be poured to a cup or the like from the spout 11e.

With the use of the water purifier 10, the purification performance of the filter materials in the water filter cartridges 14 and 15 is lowered. For example, when the purification performance of the ion exchanger 33 is lowered much and the purification performance of the activated charcoal 31 or the hollow fiber membrane module 32 is not lowered much, the water filter cartridge 15 is detached and regenerated. On the other hand, when the purification performance of the ion exchanger 33 is not lowered much and the purification performance of the activated charcoal 31 or the hollow fiber membrane module 32 is lowered much, the water filter cartridge 14 is detached and regenerated.

In the past, when the purification performance of any one of the used filter materials was lowered, the water filter cartridge was detached and regenerated. Accordingly, only the filter material of which the purification performance was lowered could not be regenerated. When the purification performance of all the used filter materials was lowered, the filter materials had to be sequentially regenerated.
On the contrary, since the water purifier 10 includes the water filter cartridge 15 including the ion exchanger 33 and the water filter cartridge 14 including the activated charcoal 31 and the hollow fiber membrane module 32, it is possible to separately regenerate the filter materials with the lowering in purification performance of the filter materials. For example, when the purification performance of both the ion exchanger 33 and the activated charcoals 31 is lowered, a regeneration process can be performed on the water filter cartridges 14 and 15 in parallel, thereby simply and efficiently regenerating the filter materials.

### Second Embodiment

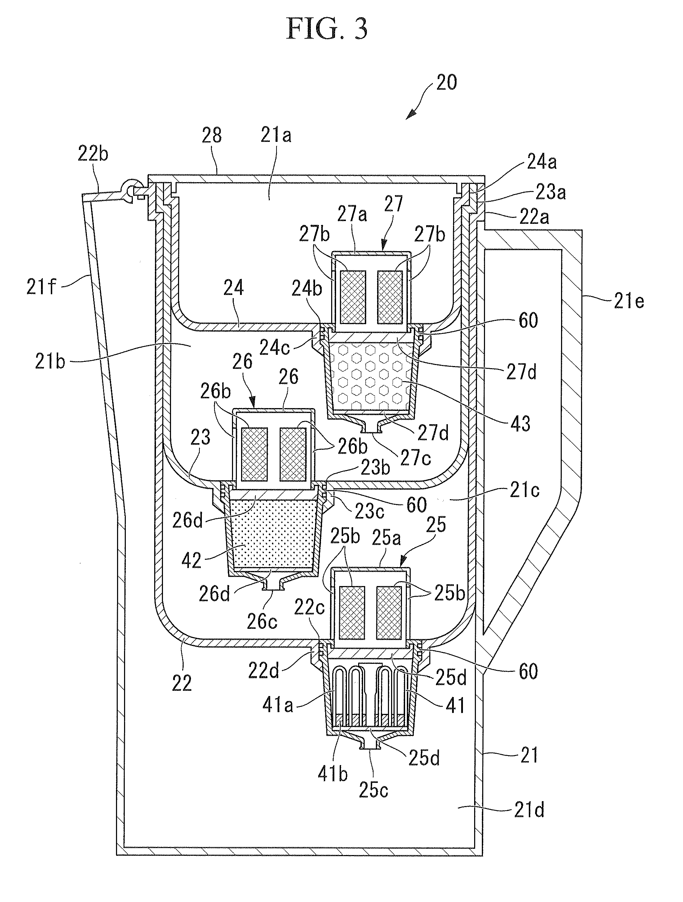

A gravity-filtration water purifier 20 (hereinafter, referred to as "water purifier 20") according to another embodiment of the invention will be described below with reference to FIG. 3.
As shown in FIG. 3, the water purifier 20 includes a vessel body 21, three partition units 22, 23, and 24 that are detachably attached to the vessel body 21 and that vertically partition a part in the vessel body 21 into four stages, three water filter cartridges 25, 26, and 27 that are attached to the partition units 22, 23, and 24, respectively, and a cover member 28 that seals the top of the vessel. The partition unit 22 is detachably attached to the vessel body to vertically partition the inside of the vessel body 21. The partition unit 23 is detachably attached onto the partition unit 22 so as to vertically further partition the part on the partition unit 22 in the vessel body 21. The partition unit 24 is detachably attached onto the partition unit 23 so as to vertically further partition the part on the partition unit 23 in the vessel body 21. Accordingly, the inside of the vessel body 21 in the water purifier 20 is partitioned into a raw water reservoir 21a, a first purified water reservoir 21 b, a second purified water reservoir 21 c, and a third purified water reservoir 21d by the partition units 22, 23, and 24.

The shape of the vessel body 21 is the same as the vessel body 11, but is not particularly limited.
A handle 21e is formed on the outer surface of one side wall of the vessel body 21. A spout 21 f communicating with the third purified water reservoir 21 d is formed on the side of the vessel body 21 opposite to the handle 21e so as to pour purified water reserved in the third purified water reservoir 21 d from the spout 21f to a cup or the like.

The partition units 22, 23, and 24 are formed of the same cup-like vessel, that is, the same inner vessels, as the partition units 12 and 13 of the water purifier 10 and stepped portions 22a, 23a, and 24a in which the vessel protrudes outward are formed on the top thereof. The partition unit 22 is detachably attached to the vessel body 21 by placing the stepped portion 22a at the upper edge of the opening of the vessel body 21.
The partition unit 23 is detachably attached to the vessel body 21 along with the partition unit 22 by placing the stepped portion 23a at the upper edge of the opening of the partition unit 22. The partition unit 24 is detachably attached to the vessel body 21 along with the partition units 22 and 23 by placing the stepped portion 24a at the upper edge of the opening of the partition unit 23.
By attaching the partition units 22, 23, and 24 on the vessel body 21, the inside of the vessel body 21 is vertically partitioned into four stages to form a third purified water reservoir 21d interposed between the vessel body 21 and the partition unit 22, a second purified water reservoir 21c interposed between the partition unit 22 and the partition unit 23, a first purified water reservoir 21b interposed between the partition unit 22 and the partition unit 23, and a raw water reservoir 21a on the partition unit 23.
A cover piece 22b closing the spout 21f is hinge-coupled to the partition unit 22 at the position corresponding to the spout 21 f of the vessel body 21.

The water filter cartridges 25, 26, and 27 are detachably attached to the partition units 22, 23, and 24, respectively, similarly to the water purifier 10. An opening 22c is formed in the bottom of the partition unit 22, a cylindrical opening stepped portion 22d extending downward from the lower edge of the opening 22c is formed, and a spiral screwed portion is formed on the inner surface of the opening stepped portion 22d so as to be screwed to the water filter cartridge 25. Similarly, the water filter cartridge 26 is screwed to the opening stepped portions 23c extending from the lower edge of the opening 23b of the partition unit 23, and the water filter cartridge 27 is screwed to the opening stepped portion 24c extending from the lower edge of the opening 24b of the partition unit 24.

The water filter cartridge 25 serves to further purify the purified water (second purified water: the purified water having been purified through two stages of the water filter cartridges 26 and 27) stored in the second purified water reservoir 21c on the partition unit 22.
The water filter cartridge 25 includes a case member 25a having a substantially cylindrical shape and having a hollow fiber membrane module 41 therein. An inlet 25b into which the second purified water flows is formed in the top of the case member 25a and an outlet 25c from which the purified water (hereinafter, referred to as "third purified water"), which is obtained by further purifying the second purified water, flows out is formed in the bottom thereof. A mesh for removing impurities in water or the like is attached to the inlet 25b of the water filter cartridge 25.
In the hollow fiber membrane module 41, a hollow fiber membrane 41a is fixed onto a filter 25d formed of non-woven fabric and located on the bottom of the water filter cartridge 25 with a potting material 41b.
The hollow fiber membrane 41a is the same as the hollow fiber membrane 32a of the hollow fiber membrane module 32 and the preferable examples thereof are also the same as described above.
The potting material 41b is the same as the potting material 32b of the hollow fiber membrane module 32.

The water filter cartridge 26 serves to further purify the purified water (first purified water: the purified water having been purified through one stage of the water filter cartridge 27) stored in the first purified water reservoir 21b on the partition unit 23.
The water filter cartridge 26 includes a case member 26a having a substantially cylindrical shape and having an activated charcoal 42 therein. An inlet 26b into which the first purified water flows is formed in the top of the case member 26a and an outlet 26c from which the second purified water flows out is formed in the bottom thereof. A mesh for removing impurities in water or the like is attached to the inlet 26b of the water filter cartridge 26. The activated charcoal 42 is received to fill a space between two filters 26d formed of non-woven fabric.
The activated charcoal 42 is the same as the charcoal 31 and the preferable examples thereof are also the same as described above.

The water filter cartridge 27 serves to further purify the raw water stored in the raw water reservoir 21a on the partition unit 24.
The water filter cartridge 27 includes a case member 27a having a substantially cylindrical shape and having an ion exchanger 43 therein. An inlet 27b into which the raw water flows is formed in the top of the case member 27a and an outlet 27c from which the first purified water flows out is formed in the bottom thereof. A mesh for removing impurities in water or the like is attached to the inlet 27b of the water filter cartridge 27.
The ion exchanger 43 is received to fill a space between two filters 27d formed of non-woven fabric and disposed in the water filter cartridge 27.
The ion exchanger 43 is the same as the ion exchanger 33 and the preferable examples thereof are also the same as described above.

The water filter cartridge 25 and the water filter cartridge 26 are preferably misaligned with each other in the horizontal position, the water filter cartridge 26 and the water filter cartridge 27 are preferably misaligned with each other in the horizontal position. In this way, by arranging the water filter cartridges 25, 26, and 27 to be misaligned with each other in the horizontal position, the distances between the partition units 22, 23, and 24 can be reduced, that is, the first purified water reservoir 21b and the second purified water reservoir 21c can be narrowed, and it is thus possible to easily suppress an increase in height of the water purifier 20, even when the heights of the water filter cartridges are large.
The cover member 28 is the same as the cover member 16 of the water purifier 10 and the preferable examples thereof are also the same as described above.

The shape of a fitting portion of the water filter cartridge 25 to the partition unit 22, the shape of a fitting portion of the water filter cartridge 26 to the partition unit 23, and the shape of a fitting portion of the water filter cartridge 27 to the partition unit 24 may be compatible with each other, at least one thereof may be incompatible with the other, and all thereof may be incompatible with each other.
When the shapes of all the water filter cartridges are compatible with each other, the order of the water filter cartridges can be freely changed. All the fitting portions of the water filter cartridges are preferably equal to each other.
When the shape of at least one of the water filter cartridges is incompatible with the other, the erroneous arrangement of the compatible water filter cartridge and the incompatible water filter cartridge can be prevented and the order of the compatible water filter cartridges can be freely changed. The method of causing the shape of at least one of the water filter cartridges to be incompatible with the other employs a method of changing the diameter of the fitting portion of at least one of the water filter cartridges, but is not limited to this method. The fitting portion of at least one of the water filter cartridges is difficult to those of the other.
When the shapes of the fitting portions of all the water filter cartridges are incompatible with each other, the erroneous arrangement of the water filter cartridges can be prevented. The method of causing the shapes of the fitting portions of all the water filter cartridges to be incompatible with each other employs a method of changing the diameters of the fitting portions of all the water filter cartridges, but is not limited to this method. The fitting portions of all the water filter cartridges are preferably different from each other.

The operation of the water purifier 20 will be described below.
The cover member 28 of the water purifier 20 is opened and raw water is supplied to the partition unit 24 which is the uppermost stage of the water purifier 20, that is, the raw water reservoir 21 a in the vessel body 21. The raw water supplied to the raw water reservoir 21a flows into the water filter cartridge 27 from the inlet 27b by its own weight and is purified by removing ions such as heavy metal ions in water through the use of the ion exchanger 43. The first purified water flows out from the outlet 27c and is stored in the first purified water reservoir 21b. The first purified water stored in the first purified water reservoir 21b flows into the water filter cartridge 26 from the inlet 26b by its own weight and is purified by removing residual chlorine in water, mold scent, and organic compounds such as trihalomethane through adsorption in the activated charcoal 42. The second purified water flows out from the outlet 26c and is stored in the second purified water reservoir 21c. The second purified water stored in the second purified water reservoir 21c flows into the water filter cartridge 25 from the inlet 25b by its own weight and is purified by filtering and removing granular materials with a diameter of 0.1 µm or more including microorganisms and bacteria through the use of the hollow fiber membrane module 41. The third purified water flows out from the outlet 25c and is stored in the third purified water reservoir 21d.
The purified water (the third purified water) stored in the third purified water reservoir 21d can be poured to a cup or the like from the spout 21f.

In the water purifier 20, since the water filter cartridges 25, 26, and 27 can be separately detached, the hollow fiber membrane module 41, the activated charcoal 42, and the ion exchanger 43 can be individually and simply regenerated. Accordingly, it is possible to efficiently perform a regeneration process with the lowering in purification performance of the filter materials and it is possible to regenerate the filter materials in parallel even when the purification performance of plural filter materials is lowered, thereby achieving high efficiency.

As described above, the gravity-filtration water purifier according to the invention includes plural partition units that vertically partition at least a part of the vessel body into plural stages, and each partition unit includes a water filter cartridge. Accordingly, it is possible to highly purify raw water using plural filter materials. In addition, since the water filter cartridges can be individually detached and the filter materials can be individually regenerated, it is possible to simplify the regeneration process and to regenerate plural filter materials in parallel, thereby efficiently regenerating the filter materials.

The gravity-filtration water purifier according to the invention is not limited to the water purifier 10 and the water purifier 20.
For example, when the water filter cartridge of each partition unit can be detached from the vessel body and the filter material can be regenerated, the water filter cartridge does not have to be detachably attached to the corresponding partition unit, but may be fixed to the partition unit.

The filter materials disposed in the water filter cartridges are not limited to the orders and combinations in the water purifiers 10 and 20. For example, the water purifier 10 may be a gravity-filtration water purifier in which an ion exchanger is disposed in the water filter cartridge 14 and an activated charcoal is disposed in the water filter cartridge 15.
Here, when two or more of the ion exchanger, the activated charcoal, and the hollow fiber membrane module are used together as the filter materials, the water cartridge including the hollow fiber membrane module is preferably disposed below the water filter cartridges including the ion exchanger and the activated charcoals. Accordingly, even when bacteria or the like propagate in the ion exchanger or the activated charcoal, the bacteria or the like can be removed by the hollow fiber membrane module, thereby easily suppressing the propagation of bacteria or the like in the resultant purified water. Particularly, when plural water filter cartridges including the ion exchanger, the activated charcoal, and the hollow fiber membrane module are used, the filter materials are preferably arranged in the order of the ion exchanger, the activated charcoal, and the hollow fiber membrane module from the top.

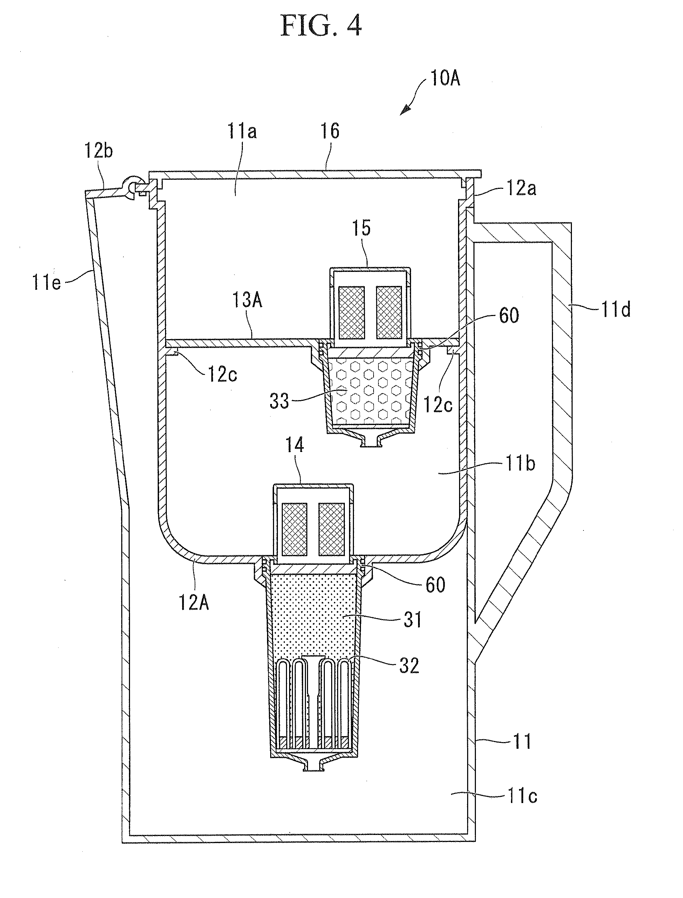

The partition unit is not limited to the inner vessel, but may have a flat panel shape. Specifically, as shown in FIG. 4, a gravity-filtration water purifier 10A that includes a partition unit 12A having the same shape as the partition unit 12 of the water purifier 10, except that a locking portion 12e extending inward from the inner surface of the side wall of the partition unit 12, a partition unit 13A having the same shape as the partition unit 13 except for the flat panel shape, and water filter cartridges 14 and 15 attached thereto, respectively, may be employed. In addition, a gravity-filtration water purifier in which the vessel body 10 is formed to have a cross-section of a sectional area decreasing toward the bottom and both the partition units 12 and 13 are formed in a flat panel shape may be employed. The partition units in the gravity-filtration water purifier according to the invention are preferably the same inner vessels as in the above-mentioned water purifiers 10 and 20, in that it hardly causes leakage of water, raw water can be stably purified, and it can be easily attached and detached.
The partition units include an air-discharge groove 50. Air is discharged from the gap between the partition units 12a and 13a without using the air-discharge groove 50, but air can be more easily discharged to raise the filtering speed by forming the air-discharge groove 50. The shape of the air-discharge groove 50 is not particularly limited, but the shape of the cross-section perpendicular to the length direction is preferably semi-circular and the sectional area thereof is preferably in a range of 0.27 to 1.8 mm².
The water purifier according to the invention is not limited to the above-mentioned pitcher type water purifier, but may be applied to a stationary gravity-filtration water purifier having a water server (water dispenser) function.

### Industrial Applicability

Since it is possible to highly purify raw water using plural filter materials and to efficiently regenerate the filter materials, the gravity-filtration water purifier according to the invention can be usefully used, for example, as a pitcher-type water purifier or a stationary water purifier.

### Reference Signs List

10, 10A, 20: GRAVITY-FILTRATION WATER PURIFIER
11, 21: VESSEL BODY
12, 12A, 13, 13A, 22, 23, 24: PARTITION UNIT
14, 15, 25, 26, 27: WATER FILTER CARTRIDGE
16,28: COVER MEMBER
31, 42: ACTIVATED CHARCOAL
32, 41: HOLLOW FIBER MEMBRANE MODULE
33,43: ION EXCHANGER
50: AIR-DISCHARGE GROOVE
60: FITTING PORTION

## Claims

1. A gravity-filtration water purifier comprising:
a vessel body;
a plurality of partition units that are detachably attached to the vessel body and that vertically partition at least a part in the vessel body into a plurality of stages; and
a water filter cartridge that is mounted on each of the plurality of partition units and that purifies water on the partition unit and supplies the purified water to below the partition unit,
wherein raw water supplied to the uppermost stage is purified using its own weight.

2. The gravity-filtration water purifier according to claim 1, wherein each partition unit includes an air-discharge groove.

3. The gravity-filtration water purifier according to claim 1 or 2, wherein an opening is formed in each partition unit and the water filter cartridge is detachably attached to the opening.

4. The gravity-filtration water purifier according to any one of claims 1 to 3, wherein each partition unit is an inner vessel.

5. The gravity-filtration water purifier according to any one of claims 1 to 4, wherein at least one of the water filter cartridges includes an ion exchanger as a filter material.

6. The gravity-filtration water purifier according to any one of claims 1 to 5, wherein at least one of the water filter cartridges includes a hollow fiber membrane module as a filter material.

7. The gravity-filtration water purifier according to any one of claims 1 to 6, wherein at least one of the water filter cartridges includes activated charcoal as a filter material.

8. The gravity-filtration water purifier according to any one of claims 1 to 7, wherein shapes of fitting portions of the water filter cartridges to all the partition units are compatible with each other.

9. The gravity-filtration water purifier according to any one of claims 1 to 7, wherein a shape of a fitting portion of the water filter cartridge to at least one of the partition units is incompatible with the other shapes.

10. The gravity-filtration water purifier according to any one of claims 5 to 9, wherein the ion exchanger is an Na-type ion exchanger or a K-type ion exchanger.
